# EUROPEAN PATENT APPLICATION

(11) **EP 2 144 150 A2**
(43) Date of publication of application: **13.01.2010**
(21) Application number: 09290550.4
(22) Date of filing: 08.07.2009
(51) Int. Cl.: G06F 3/048

(54) **An ergonomic handheld device**

(30) Priority: 08.07.2008 US 168897
(71) Applicant: Emblaze Mobile Ltd., 43662 Industrial Area Ra'anana (IL)
(72) Inventor: Reifman, Eli, Ra'anana 43662 (IL); Vonshak, Itai, Tel-Aviv (IL); Rapoport, Alex, Tal Shahar, 245 (IL)
(74) Representative: Corret, Hélène

(57) **Abstract**

A mobile device comprising a touch screen and a method for activation thereof using one hand. The device is provided with physical controls or virtual such as touch-screen controls arranged in areas reachable when using one hand, preferably for right-handed persons the right hand side of the device and the vertically middle area of the device. The user interface of various options and applications is arranged so that the relevant operations are performed via controls located in these areas. The controls may change dynamically according to the application or operation.

## Description

### TECHNICAL FIELD

The present disclosure relates to handheld devices in general, and to ergonomic devices and related methods, in particular.

### TECHNICAL BACKGROUND

As mobile devices offer more and more functionalities, their operation becomes more complex. When many options are to be offered, the options can be activated either by navigating through multiple menus, buttons, options and others, which is error prone and time consuming. Further, switching between various options and applications requires complex navigation for aborting one activity and starting another. Alternatively, the number of buttons through which options can be accessed can be increased, which will inevitably cause the miniaturization of the button size. Fitts' law, which presents a model of human movement, predicts the time required to move to a target area, such as a button or another control on the device, as a function of the distance to the target and the size of the target. According to Fitts' law, the required time for activating a control increases as the distance to the target increases or as the target size decreases. Applying Fitts' law to mobile devices suggests that the time required to activate a control such as pressing a button, increases as the distance between the control and the current position of the finger or another relevant part of the hand increases, and as the size of the control decreases. Thus, increasing the number of controls will lead to the controls being smaller or more dispersed over the device, and thus increases the time required to activate the controls. Alternatively, enlarging the controls will require more actions on the side of the user for performing actions, and thus again increase the total time.

The problem becomes even more severe with the increasing availability requirements of operations offered by a mobile device. Thus, people often try to perform operations while walking, driving, talking on another phone or under other circumstances in which their attention or at least one hand is occupied, thus again increasing the frequency of errors caused by incorrect operation.

There is thus a need in the art for a mobile device that is easily and comfortably operable with a single hand. The device should enable speedy and comfortable activation of multiple operations, without requiring complex navigation or numerous gestures.

### SUMMARY OF THE DISCLOSURE

A mobile computing device that can be used single-handedly, so that frequently used options and features are arranged around areas reachable by the thumb of the right hand (for right-handed persons).

In accordance with a preferred embodiment of the disclosure there is thus provided a mobile computing device, device comprising: three or more controls, the controls arranged along two substantially orthogonal lines and operable by a single hand of a user holding the mobile computing device. Within the device, one or more controls are optionally implemented as a screen element sensitive to pressure. The device is substantially fully operable by controls arranged along the two substantially orthogonal lines. Within the device, one or more of the controls is available to the user during substantially all operations of the device. Within the device, one line is optionally a horizontal line located substantially along the vertically middle area of the device, and a second line is optionally a vertical lone located near the right-hand side of the device or near the left-hand side of the device. Within the device, one or more controls are optionally physical controls, or virtual controls, or are implemented as a touch-screen element.

In accordance with another preferred embodiment of the disclosure there is thus provided a method for providing functionality by a mobile device having a display, wherein the mobile device can be operated by a user using one hand, the method comprising: displaying or providing a first group of controls arranged in a first area of the mobile device, the first area reachable with the hand; and receiving first input from the user. The method optionally further comprises a step of displaying a second group of controls arranged in a second area of the mobile device, the second area reachable with the hand and substantially orthogonal to the first area. The method can further comprise the steps of: receiving second input from the user; and displaying information according to the first and the second input. Within the method, Within the method, the first area optionally contains a right-hand side area of the display and the second area optionally contains a substantially vertically-middle area of the display. Within the method, the second group of controls is optionally dynamic. Within the method, the second group of controls optionally provides a menu hierarchy. Within the method, the first group of controls or the second group of controls optionally enable the selection of a menu item or a list item. Within the method, the first group of controls or the second group of controls optionally enable operations related to a list item.

In accordance with yet another preferred embodiment of the disclosure there is thus provided a mobile device to be operated by a body part of a user used for activating controls on said mobile device, the controls are placed substantially on areas accessible to said body part. The mobile device optionally comprises a touch screen. Within the mobile device, the area accessible to the finger is optionally in a T-shape. Within the mobile device, the area accessible to the finger is optionally defined by the right-hand area and the vertically middle area of a front panel of the mobile device or by the left-hand area and the vertically middle area of a front panel of the mobile device. Within the mobile device, the body part is optionally a finger.

### BRIEF DESCRIPTION OF THE DRAWINGS

Exemplary non-limited embodiments of the disclosed subject matter will be described, with reference to the following description of the embodiments, in conjunction with the figures. The figures are generally not shown to scale and any sizes are only meant to be exemplary and not necessarily limiting. Corresponding or like elements are designated by the same numerals or letters.
Fig. 1 is a schematic illustration of a mobile computing device comprising controls operable single handedly, in accordance with a preferred embodiment of the disclosure;
Fig. 2 is a schematic illustration of a mobile computing device in accordance with a preferred embodiment of the disclosure;
Figs. 3A, 3B, 3C are schematic illustrations of a mobile computing device in accordance with a preferred embodiment of the disclosure, in different usage modes;
Fig. 4 is a flowchart of the main steps in a preferred embodiment of a disclosed method; and
Fig. 5 is a block diagram of the main components of a mobile device in accordance with the disclosure.

### DETAILED DESCRIPTION OF THE PREFERRED EMBODIMENT

In preferred embodiments of the disclosure, a handheld device, such as a mobile phone or a Personal Digital Assistant (PDA) comprises a touch screen equipped with buttons or other controls located along two diagonal axes, such that a user can operate the device single-handedly in substantially all modes, or at least in modes that require high efficiency. At least three controls are required to define and populate the two axes, so in a preferred embodiment, a first group of controls is located along an edge, such as the right edge of the device, and a second group of controls is located along a line parallel to the upper and lower edges of the device, preferably within the vertically middle third of the device. Although a scrollbar, for example, may appear as a single control, since it has at least two functionalities being scrolling upwards and downwards, it is considered as two controls. Thus, a user holding the device can easily reach any control within the T-shape area defined by the two groups with his or her thumb, without having to change the holding, use a second hand, or perform any other action which may reduce comfort, limit functionality or otherwise harm the user's experience. The disclosed method and apparatus enable the comfortable usage of a touch-screen device with a single hand, thus accounting for efficiency. In prior art systems, when the manufacturer wishes to provide a large display and enable many functions and options to a device, usually a significant number of buttons and controls are provided and spread over substantially the entire screen, to enable these options. However, the larger device implies that it is hard for a person having an ordinary-sized hand to easily reach all the areas of the screen. Further, when a touch screen is used, there is no tactile information regarding the buttons and the separation thereof. Therefore, buttons should be large enough and well separated, for example 1cm apart, in order to enable the user to activate the right button. By placing the controls substantially only on those areas easily reachable with a single hand, the actions implemented this way can be performed more efficiently. This is useful mainly in actions performed frequently, for which speed is important, such as scrolling through a contact list or through a calls list. It will be appreciated that actions for which efficiency is less crucial, buttons and controls can be located in other areas of the display.

The controls of the first group are preferably fixed and are operative in substantially all operation modes of the device. However, their functionality may change according to the active mode. The first group preferably comprises controls having functionalities such as "Menu", "Search", wherein the "Search" button may search within the contact list when the user is browsing the contact persons, and within the pictures when the user is browsing the pictures archive. The controls of the second group appear, disappear, or change according to the active operation mode. For example, when the user is browsing a contact persons list, the second group may comprise buttons for "call", "Send message", or the like, and when the user is browsing a music list the buttons may include a "Play" button.

Thus, the device is designed to be operable by the thumb of the user, which is used for activating controls placed substantially on the most accessible areas, for example, the T-shape area defined by the right-hand area and the vertically middle area of the front panel of the device. For left-handed persons, the controls are preferably placed in the symmetric arrangement, comprising the left-hand area and the vertically middle area of the front panel of the device, so that the controls required for operating the device are easily accessible by the thumb of a user holding the device.

It will be appreciated by a person skilled in the art that some controls can be implemented as touch-buttons activated and deactivated by software components, while other controls can be implemented as physical controls, such as buttons, handles, switches or the like.

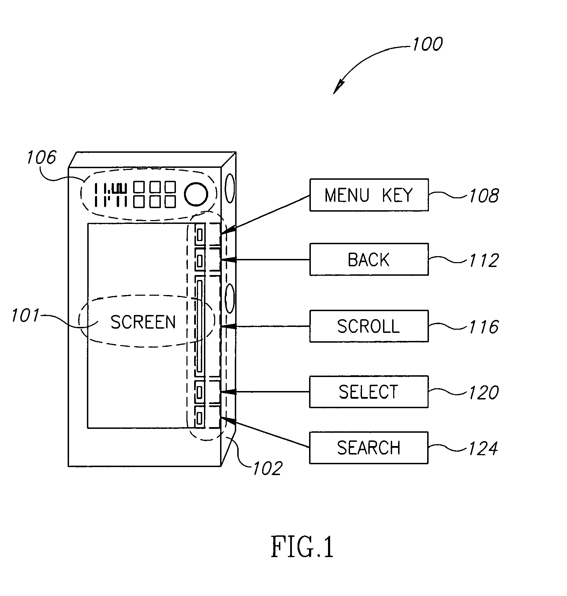

Referring now to Fig. 1, showing a schematic illustration of a preferred embodiment of a mobile computing device comprising controls operable using the thumb of one hand. The device, generally referenced 100 is mobile computing device, providing functionalities such as but not limited to a mobile phone, a PDA, a music player, a video player, a Global Positioning System (GPS), or others. Device 100 is equipped with screen 101, which displays data, text, images or any other digital data. Display 101 or parts thereof are touch-sensitive, i.e., an event is fired when a user activated pressure, such as by touching the screen in predetermined area. The areas which cause the firing of an event may change according to the mode the device is in. Thus, certain areas of screen 101 may always generate events when touched, while other areas may fire events on certain modes, while yet other areas may never cause the firing of any event. Device 100 comprises a CPU that executes computer instructions arranged in executables, libraries, scripts or any other components. The components may activate screen elements, such as predetermined areas of the display as touch buttons, such that when the user touches or otherwise activates pressure on this area, an event indicating the button is fired. Thus, in preferred embodiments of the disclosure, a multiplicity of buttons 102 is implemented along the right-hand side of display 101.

Buttons 102 optionally comprise "Menu" button 108 which exits in any mode or application, returns to the default state, preferably an idle state and presents the main menu of the device, which enables all options. In preferred embodiments, if the user is performing an action, such as typing a message, the menu is presented only after asking the user for confirmation.

Buttons 102 optionally comprise "Back" button 112, which resumes the previous state of the device, and scroll bar 116 which enables scrolling through a list presented on the screen. Navigation is preferably performed in a hierarchical or tree-like manner, in which navigating to a state or an operation enables new relevant options which were not enabled before. For example navigating to "Music" state enables the user to listen to pre-captured music, download other music, or assign music to certain operations, while navigating to "Contacts" mode enables viewing, editing, deleting, or adding contacts. Thus, "Back" button 112 preferably returns one step back in the menu and operations hierarchy. It will be appreciated that area 102 can be divided into a left hand area which mainly contains visual indications and a right-hand area which is responsive to touches and gestures by the user. However, even when such division is performed, gestures can still be captured from the left side of area 102. Generally, a responsive area, i.e. an area containing a touch-button is not limited to the area as indicated on the screen, and larger area surrounding the button can fire the same event as the button itself.

Scroll bar 116 optionally comprises areas preferably near its ends which when touched briefly scroll to the beginning or the end of the presented list, or scroll one page up or down. Buttons 102 further comprise "Select" button 120 which selects the currently active item form the presented list, and "Search" button 124 which searches for an item in the active state. "Search" button 124 preferably behaves differently in different states. For example, if display 101 presents a contact list, "Search" button 124 will search for contacts according to the entered string, while if display 101 presents a picture list, "Search" button 124 will search for images according to the entered string.

The device optionally comprises area 106 which shows one or more indicators relevant for the device or to the user, such as the time, date, battery status, reception status, or others.

It will be appreciated by a person skilled in the art that buttons 102 or other buttons detailed below, or indicators 106 optionally exceed the boundaries of display area, i.e. parts of the screen which are not used for displaying information can nevertheless produce events when touched.

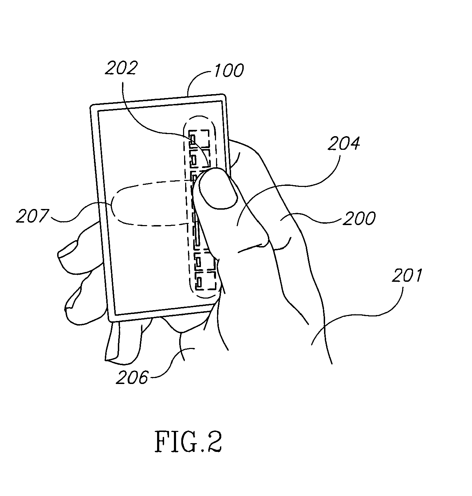

Referring now to Fig. 2 showing an optional grip of a mobile device according to the disclosure. On Fig. 2, a user is holding device 100 in "portrait" orientation, in his hand 201, between finger 200 and palm 206. The user's thumb 204 is free and easily reaches area 202 comprising multiple buttons such as buttons 102 detailed in association with Fig. 1 above, and area 207 comprising further buttons, optionally according to the active mode of the device. Thus, if substantially all controls the user has to operate are concentrated in area 202 and area 207, then device 100 is operable with a single hand using a single finger for navigation, positioning, pointing, input and other functionalities.

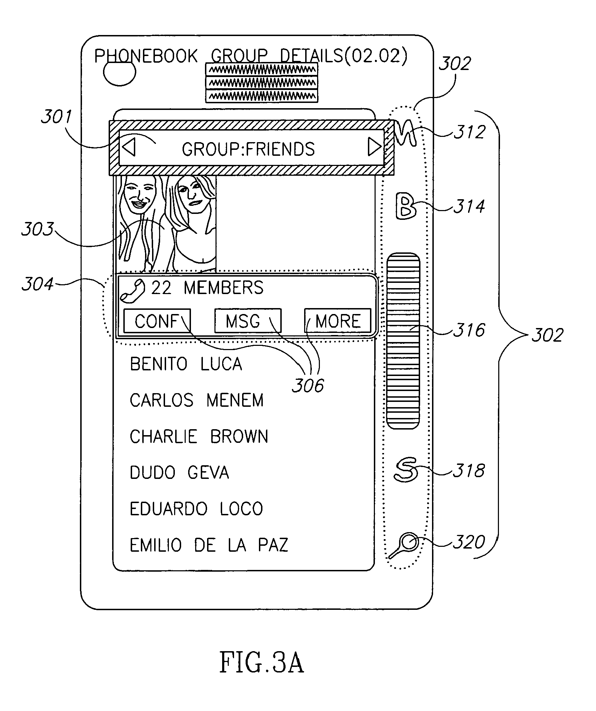

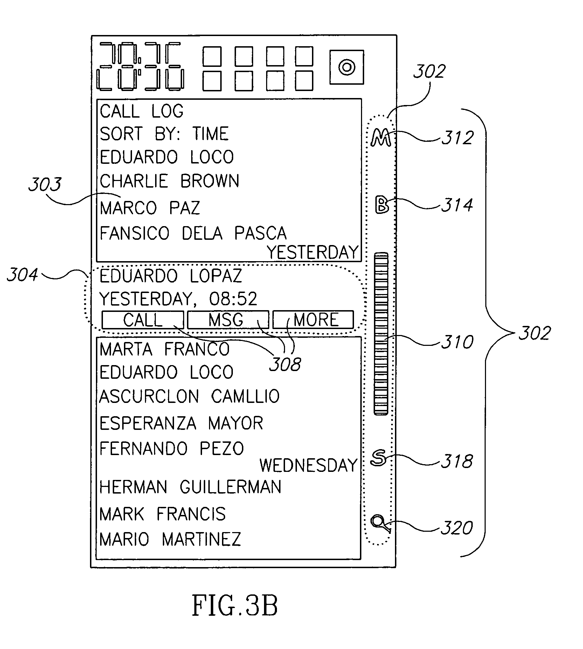

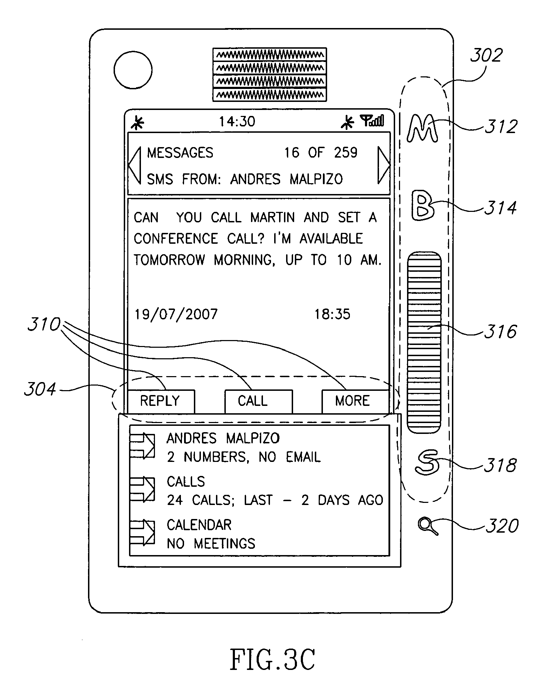

Referring now to Fig. 3A, Fig. 3B and Fig. 3C, showing device 300 in exemplary operation modes. In Fig. 3A, Device 300, which is preferably a mobile device having telephone capabilities is displaying group details, as noted in title 301. The group description and group members are displayed on display 303 as a vertical list. The active entry of the list is the group description 306, for which "Conf', "Msg", and "More" buttons 306 are displayed. When the user uses scrollbar 316 to scroll through the list, the row at or closest to the middle of the display is highlighted, and pressing "Select" button 314 will select the row and enable the relevant options for the row, by displaying buttons with the options, such as buttons 306. Thus, in order to scroll through the list the user does not have to repeat a scrolling gesture which advances the list one page at a time. By using scrollbar 316 any item in the list can be reached by one or more finger stroke. It will be appreciated by a person skilled in the art that the activation of scrollbar 316 can be designed in multiple ways. For example, pressing the top or the bottom area of scrollbar 316 may skip to the first or the last items of the list, respectively. In other preferred embodiments, actions such as short tapping, long tapping or the like, can be used. In one preferred embodiment, a single stroke along the scrollbar scrolls through the whole list, wherein stopping the stroke strops the scrolling. In other preferred embodiments, the scrolling speed of the list depends on the distance between the location of the finger from the middle area of the scrollbar, i.e. as the finger of the user is closer to the top or the bottom end of the scrollbar, the scrolling speed upwards or downwards, respectively, is higher. As long as the user keeps his or her fingers in the same location, scrolling continues in the same speed. In yet other preferred embodiments, each stroke along the scrollbar scrolls the list in the respective direction, wherein some kinetic effect is supplied, for example by scrolling the list faster if the stroke is faster and vice versa. In this embodiment, keeping one's finger in the same location stops the scrolling, which can be resumed when further strokes are performed.

"Menu" button 314 will exit the current mode and return to the main menu of the device, "Back" button 318 will navigate back to the menu or option from which the list was opened, and "Search" button 320 will enable a user to type text and search for contacts within the displayed group starting or containing the typed text.

Referring now to Fig. 3B, showing device 300 in call log presentation mode. Display 303 presents a vertical list of calls sorted by time. When the user scrolls by using scrollbar 316 the row at or near the middle of display 303 is highlighted, and when "Select" button 314 is pressed, the row is selected and buttons relevant for the call are presented, such as "Call", "Msg", and "More" buttons 308.

Referring now to Fig. 3C showing device 300 in a contact-person-related mode, in which all operations related to a certain contact person are enabled. Scrolling by using scrollbar 316 will scroll between the relevant options, such as showing messages to or from the person 317, showing the person's details 319, showing calls to or from person 329 and showing meetings with the person 320. When a particular option is selected using "Select" button 314, the relevant options are presented, preferably along or near the middle part of display 300, such as "Reply", "Call", or "More" buttons 310. Alternatively, pressing "Select" button 314 initiates the most common action in such modes, for example answering an SMS when a list of SMSs is being traversed, calling a number when a calls list is being traversed, or the like. In both options, the relevant buttons are on the T-area easily accessible with a single hand.

Fig. 3A, Fig. 3B and Fig. 3C demonstrate the usage of device 300 performed by activating buttons located along two main lines, being the right hand side area of the device and the vertically middle area of the device. It will be appreciated that Fig. 3A, Fig. 3B and Fig. 3C are exemplary only, and other applications and operation modes of the device can also be designed so that the operations are activated by using controls located in these areas. For example, when a menu is to be displayed, it is possible to display the menu so that the currently available options are displayed as a vertical list, wherein the item appearing near the middle vertical area of the display is highlighted, and when selected, options are displayed. With the buttons arranged along the lines, the device can be operated single-handedly in a comfortable manner.

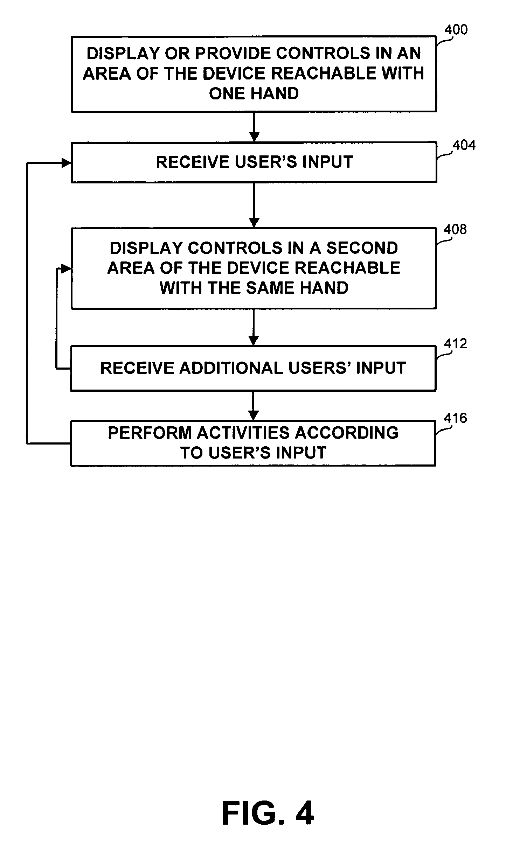

Referring now to Fig. 4, showing a flowchart of the main steps in a method for activating a mobile device in accordance with a preferred embodiment of the disclosure. On step 400 a group comprising multiple controls, including hardware or software controls, the software controls preferably implemented as touch screen buttons are provided on one area of the display. The controls are arranged so that they can be accessed when being held by one hand, with the same hand or a finger thereof. On step 404, the device receives user input generated by using any of the controls or by pressing one or more keys from the device's keypad. According to the user's input, on step 408 the device displays a second group of controls, on another area of the device which is also reachable with the same hand. Optionally, different controls are displayed on step 408, according to the mode the device was initially in, and according to the user's input. On step 412 further input is received from the user, through the first group of controls, the second group of controls or the keypad, and on step 416 an action is taken, according to the user's input. Steps 408 and 412 can be repeated when multiple actions required in order to perform a certain activity, such as selection through a complex menu hierarchy. Similarly, steps 404, 408, 412 and 416 can be repeated for further activities.

Thus, the device is a touch screen device operable with a single hand, and can be used easily without requiring the user to use his second hand or any other body part. Preferably, the first area is the right-hand side of the display, and the second area is the vertically middle area of the device, so that a user can operate the device with his or her right hand alone.

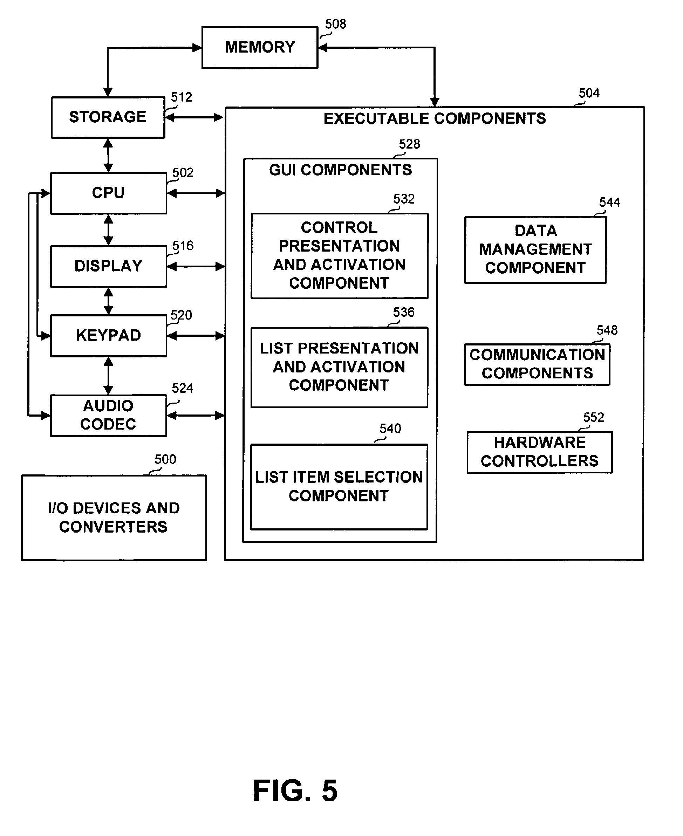

Referring now to Fig. 5, showing a block diagram of the main components in a mobile device in accordance with the disclosure. The mobile device comprises I/O devices and converters 500, which preferably comprise a microphone, a speakerphone, an analog-to-digital converter and a digital-to-analog converter. The device further comprises one or more processors units (CPU) 502 for executing the software parts of executable components 504 detailed below, memory 508 for volatile storage of data and code and storage 512 for permanent storage of data such as contact list details, music, files, image files or any other data, and modules comprising computer instructions to be executed and perform methods associated with the device. The device further comprises display 516 for displaying to the user details, options, selections, images, messages, and other user-interface elements, keypad 520 for entering numeric or character values, or making selections, and audio codec 524 for compressing, decompressing and streaming digital audio data according to the used audio format. Executable components 504 optionally comprise software components executed on processing unit 502, or components implemented as firmware ported for a specific processor such as digital signal processor (DSP) or microcontrollers, or as hardware or configurable hardware such as field programmable gate array (FPGA) or application specific integrated circuit (ASIC). Executable components 504 comprise Graphic User Interface (GUI) components 528 for presenting and controlling various user interface elements as detailed below, data management components 544 for managing information stored on the device, such as contact list, files or other data, communication components 548 for establishing communication with a network if the device is intended for such communication, and hardware controllers 552 for controlling the hardware devices, such as I/O devices 500, display 516, keypad 520 or others. GUI components 528 comprise control presentation and activation component 532 for presenting and activating controls, including touch-buttons i.e. areas of the display which generate events when touched. The touch buttons are defined dynamically, i.e. their existence, location, area, displayed text, or associated event depend on the state of the device, the application being executed, and the like. GUI components 528 further comprise list presentation and activation component 536 for presenting a list of items vertically, and keeping the list item presented closest to the middle of the device highlighted. Component 536 also handles the list scrolling in response to events generated by activating a scrollbar implemented as part of the display. GUI components 528 further comprise list item selection component 540 for selecting the highlighted list item in response to an event generated by pressing a "select" button, and enabling the relevant options for the list item. It will be appreciated by a person skilled in the art that additional components, executables, modules or other units may be designed and implemented as part of GUI components 528, for example modules for presenting images or videos, and performing other operations. The detailed components are operative in the methods of the disclosed method and are therefore detailed further. It will be further appreciated that any of GUI components 528 can be implemented by using a preexisting optionally third party library such as TAT Cascade user interface platform, offered by TAT of Sweden (www.tat.se), for generating and controlling touch-screen elements or other GUI libraries.

The method, apparatus and operation thereof disclose the usage of a mobile device using a single hand. The device comprises controls, whether constant and physical or virtual and dynamic which are arranged along two main substantially orthogonal lines, a vertical line (or axe) along the right hand side of the device, and a horizontal line (or axe) along a substantially middle area of the device. The operation mode of such devices can be designed so that at any given state significantly all options available to a user are arranged along these lines, whether the user browses through a menu hierarchy, reviews a list or performs actions related to a particular item.

It will be appreciated by a person skilled in the art that the disclosed concepts, apparatus, and method can be used within any mobile device, such as a PDA, and are not limited to a mobile phone, or any other type of device. Rather, the method and apparatus can be utilized for presenting and using any type of information as list, and controlling the list presentation and item selection and activation from predetermined areas of the device, so the device is operable single-handedly. It will also be appreciated that although the shown devices are more suitable for right-handed persons, a symmetric version that is comfortable for use by left-handed can be designed and implemented, and is covered by the disclosure. It will further be appreciated that the disclosed designs and apparatus can be utilized by a person using an artificial pointing device or another instrument for activating pressure and thus firing events associated with screen parts, rather than touching the screen with a finger or another body part.

It will also be appreciated by a person skilled in the art that multiple variations and options can be designed along the guidelines of the disclosed method and apparatus. Such variations are covered by the disclosure.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular situation, material, step of component to the teachings without departing from the essential scope thereof. Therefore, it is intended that the disclosed subject matter not be limited to the particular embodiment disclosed as the best mode contemplated for carrying out this invention, but only by the claims that follow.

## Claims

1. A mobile computing device, the mobile computing device comprising: at least three controls, the at least three controls arranged along two substantially orthogonal lines and operable by a single hand of a user holding the mobile computing device.

2. The mobile computing device of claim 1 wherein at least one control is implemented as a screen element sensitive to pressure.

3. The mobile computing device of claim 1 wherein the device is substantially fully operable by controls arranged along the two substantially orthogonal lines.

4. The mobile computing device of claim 1 wherein at least one of the at least three controls is available to the user during substantially all operations of the device.

5. The mobile computing device of claim 1 wherein one line is a horizontal line located substantially along the vertically middle area of the device.

6. The mobile computing device of claim 5 wherein a second line is a vertical line located near the right-hand side or near the left hand side of the device.

7. The mobile computing device of claim 1 wherein at least one control is implemented as a touch-screen element.

8. A method for providing functionality of a mobile device having a display, wherein the mobile device can be operated by a user using one hand, the method comprising:
displaying or providing a first group of controls arranged in a first area of a front panel of the mobile device, the first area reachable with one hand of the user;
displaying a second group of controls arranged in a second area of the mobile device, the second area reachable with the one hand of the user and substantially orthogonal to the first area;
receiving input from the user; and
displaying information according to the input.

9. The method of claim 8 wherein the first area contains a right-hand side area of the display and the second area contains a substantially vertically-middle area of the display.

10. The method of claim 8 wherein the second group of controls is dynamic.

11. The method of claim 8 wherein the second group of controls provides a menu hierarchy.

12. The method of claim 8 wherein the first group of controls or the second group of controls enable the selection of a menu item or a list item or operations related to a lost item.

13. A mobile device to be operated by a body part of a user used for activating controls on said mobile device, the mobile device comprising a touch screen and the controls placed substantially in a T-shape area accessible to the body part.

14. The mobile device of claim 13 wherein the area accessible to the body part is defined by the vertically middle area of a front panel of the mobile device, and the right-hand area or left-hand area of the front panel of the mobile device.

15. The mobile device of claim 13 wherein the body part is a finger.
